Europäisches Patentamt

European Patent Office

Office européen des brevets

(19)

(11) Numéro de publication : **0 322 929 B1**

(12)

# FASCICULE DE BREVET EUROPEEN

(45) Date de publication du fascicule du brevet :
18.09.91 Bulletin 91/38

(51) Int. Cl.⁵ : **A01K 63/04**, C02F 3/34, C02F 1/68

(21) Numéro de dépôt : 88200974.9

(22) Date de dépôt : 17.05.88

(54) **Produit et procédé de régénération biologique d'un milieu aquatique, en particulier de l'eau d'un Aquarium.**

(30) Priorité : 28.12.87 FR 8718341

(43) Date de publication de la demande :
05.07.89 Bulletin 89/27

(45) Mention de la délivrance du brevet :
18.09.91 Bulletin 91/38

(84) Etats contractants désignés :
AT BE CH DE ES FR GB GR IT LI LU NL SE

(56) Documents cités :
BE-A- 659 940
DE-B- 1 056 082
FR-A- 1 299 104
US-A- 3 929 101

(73) Titulaire : Caissel, Jacques
9, rue du Sénéchal
F-31000 Toulouse (FR)

(72) Inventeur : Caissel, Jacques
9, rue du Sénéchal
F-31000 Toulouse (FR)

(74) Mandataire : Barre, Philippe
Cabinet Barre-Gatti-Laforgue 95 rue des
Amidonniers
F-31069 Toulouse Cédex (FR)

EP 0 322 929 B1

# Description

L'invention concerne un produit de régénération biologique d'un milieu aquatique, en particulier de l'eau d'un aquarium ; elle s'étend à un procédé de régénération utilisant ledit produit.

Dans la demande de brevet FR n° 85.16093 déposée le 28.10.85 au nom du demandeur, publiée sous le n° 2.589.034, on a décrit un amendement organique et son procédé de fabrication, en vue d'enrichir un sol et d'apporter aux cultures les éléments nutritifs nécessaires à leur développement. Il est rappelé que le procédé de fabrication de cet amendement consiste essentiellement à :

(a) recueillir des fumiers d'animaux, tels que fumiers d'ovins, de bovins ou de chevaux,

(b) recueillir des déchets végétaux, tels que rafles de maïs, déchets végétaux d'ensilage, émondes de haies ou branchages,

(c) broyer lesdits déchets végétaux,

(d) mélanger les fumiers d'animaux et le broyat de déchets végétaux,

(e) humidifier le mélange ou les composants avant mélange,

(f) confectionner au moyen dudit mélange humidifié des andains situés les uns à proximité des autres sur une aire de compostage,

(g) ventiler chaque andain par aspiration intermittente d'air à travers chacun d'eux,

(h) contrôler la température au coeur des andains et récupérer le compost en fin de fermentation lorsque la température décroît au-dessous d'un seuil prédéterminé,

(i) recycler le compost ainsi récupéré en le mélangeant et en confectionnant de nouveaux andains sur une aire de maturation,

(j) ventiler ces nouveaux andains par soufflage en vue d'assurer une fermentation complémentaire et un premier séchage,

(k) soumettre ledit compost à un séchage complémentaire,

(l) et affiner ensuite ledit compost en le soumettant à un broyage final.

De préférence, les fumiers d'animaux et les broyats de déchets végétaux sont mélangés dans une proportion pondérale de fumiers par rapport aux déchets comprise entre 30% et 50%. De plus, après séchage, le compost est soumis à un broyage final qui, en particulier, ramène sa granulométrie moyenne à une valeur approximativement comprise entre 0,1 et 3 mm.

L'on se reportera à la demande de brevet susévoquée pour plus de détails sur cette fabrication et sur les installations et équipements utilisés.

Cette fabrication conduit à un amendement organique, riche en matières organiques, en azote et en produits minéraux et dont la fermentation est achevée.

Le demandeur a mis en évidence que cet amendement pouvait être utilisé comme produit de régénération d'eau, en particulier dans les aquariums, et qu'il donnait des résultats remarquables inattendus sur la faune et la flore, en rétablissant le cycle naturel de l'azote par transformation des nitrites toxiques en nitrates non toxiques.

Jusqu'à présent, on a utilisé des produits de régénération de milieu aquatique inerte (voir p.ex. US-A-3929101).

L'objectif de la présente invention est donc de fournir un nouveau produit de régénération biologique d'eau, et plus généralement d'un milieu aquatique, capable de transformer les nitrites contenus dans ledit milieu en nitrates directement assimilables par les plantes aquatiques.

Le produit de régénération biologique conforme à l'invention est à base d'amendement organique, contenant des bactéries nitrophiles de la famille des azoto-bacter, et fabriqué par fermentation complète d'un mélange de fumiers d'animaux et de déchets végétaux.

Ce produit est réalisé à partir de l'amendement organique naturel fabriqué par mise en oeuvre du procédé évoqué précédemment, défini dans la demande française 2589034.

La dose optimale à utiliser est d'environ 20 g à 40 g d'amendement organique pour 100 litres d'eau à régénérer. L'amendement est disposé à un emplacement où existe une circulation d'eau, soit à l'intérieur de l'aquarium, en particulier à proximité des buses d'aspiration du système de filtration, soit à l'intérieur d'un filtre externe.

Les effets favorables observés sur la faune et la flore proviennent d'une modification des caractéristiques de l'eau (nitrites transformés en nitrates) qui entraînent une croissance plus rapide des plantes aquatiques, une élimination complète des algues et une fortification de la faune (couleurs plus brillantes...).

Le produit de régénération conforme à l'invention est de préférence conditionné en cartouche possédant deux faces opposées permettant le passage de l'eau ; l'amendement organique est interposé entre deux couches perméables à l'eau, par exemple petits graviers, qui sont disposés au niveau desdites faces en vue de la rétention dudit amendement.

En particulier, la cartouche possède, d'une part, un fond percé d'une pluralité de lumières de passage d'eau, obturées par une pellicule auto-collante à détacher, d'autre part, une face opposée ouverte munie d'un couvercle clipsé sur le pourtour de la cartouche. Une plaquette percée d'une pluralité de lumières de passage peut le cas échéant être placée sous le couvercle pour assurer la rétention des couches de graviers lorsque le couvercle est enlevé.

La cartouche peut être utilisée à l'intérieur d'un aquarium à fond de sable ou dans un filtre externe d'aquarium ; l'on décolle la pellicule disposée sur le fond perforé, l'on enlève le couvercle et dans un cas, l'on immerge la cartouche avec le fond bloqué dans le sable de l'aquarium, et dans l'autre, l'on insère la cartouche dans le filtre de façon qu'elle soit traversée par le flux d'eau.

Le cas échéant, le produit de régénération conforme à l'invention peut être conditionné en sachets à parois perméables à l'eau, appelés à être immergés au fond de l'aquarium, ou peut encore se présenter sous forme de matelas destinés à être insérés sous le sable.

La description qui suit en référence aux dessins annexés présente un mode de réalisation de cartouche de régénération conforme à l'invention et illustre sa mise en oeuvre ; sur ces dessins :
— la figure 1 est une vue en perspective de ladite cartouche de régénération,
— la figure 2 en est une coupe partielle par un plan axial, à échelle dilatée,
— la figure 3 schématise la cartouche prête à être utilisée à l'intérieur d'un aquarium, en vue de permettre d'effectuer des plantations dans celle-ci, et la figure 4 schématise ladite cartouche en place dans ledit aquarium,
— la figure 5 schématise la cartouche prête à être utilisée dans un aquarium (sans plantation) ou dans un filtre externe d'aquarium,
— les figures 6 et 7 schématisent la cartouche en place dans l'aquarium ou dans le filtre.

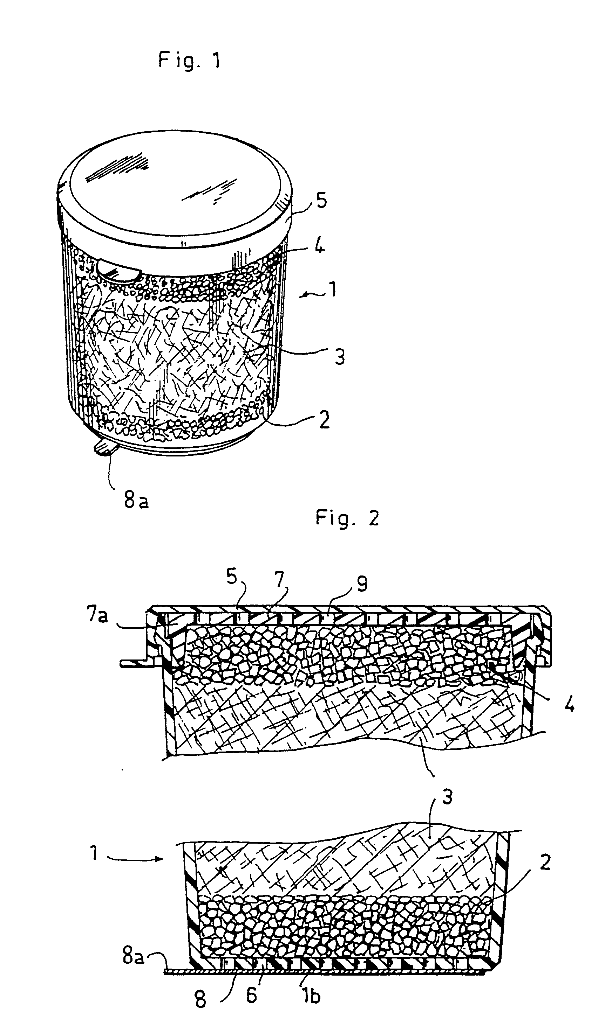

La cartouche de régénération biologique d'eau, représentée à titre d'exemple aux figures 1 et 2, est constituée par un gobelet rigide 1 moulé en matériau synthétique transparent inerte, dans lequel ont été disposées trois couches superposées : une couche inférieure de petits graviers 2, une couche intermédiaire de produit de régénération 3 et une couche supérieure 4 analogue à la couche 2.

Le gobelet 1 possède un fond 1b et une paroi latérale légèrement tronconique, avec une face supérieure ouverte.

La couche de produit de régénération 3 occupe environ 70 à 80% de la hauteur du gobelet et est légèrement comprimée entre les deux couches de graviers 2 et 4. Ce produit est constitué par l'amendement organique fabriqué par le procédé défini dans la demande FR 2.589.034 ; les analyses ont montré qu'il contenait notamment des bactéries de la famille des azoto-bacter.

La dose de produit de régénération à prévoir est d'environ 0,2 à 0,4 g par litre d'eau à régénérer. En l'exemple, la cartouche est prévue pour la régénération d'un volume de 50 litres d'eau et contient entre 10 et 20 g de produit, en particulier 15 g. Lors de la fabrication dudit produit, la dernière étape consistant en un broyage final est réalisée de façon que la granulométrie moyenne du produit obtenu soit d'environ 1 mm.

Le gobelet 1 est muni d'un couvercle 5 qui est clipsé sur un bourrelet la entourant son bord supérieur ; une languette 5a facilite le retrait dudit couvercle.

Le fond 1b du gobelet est percé d'une pluralité de lumières telles que 6, ayant des diamètres inférieurs à environ 2,5 mm et notamment de l'ordre de 2 mm. Ces lumières sont prévues en nombre approprié pour former une section totale de passage comprise entre 0,5 et 1,5 cm².

Les graviers qui forment la couche inférieure 2 et la couche supérieure 4 ont une granulométrie moyenne de l'ordre de 3 à 4 mm, supérieure à celle des lumières 6.

Par ailleurs, sous le fond 1b est collée une pellicule autocollante 8, qui obture les lumières 6 ; cette pellicule peut être aisément détachée grâce à une languette 8a qui dépasse sur un côté.

De plus, dans le mode de réalisation de la figure 2, la cartouche est munie d'une plaquette 7 qui est disposée sous le couvercle 5 et est percée d'une pluralité de lumières 9 dont les dimensions et la répartition sont identiques à celles des lumières 6 du fond. En l'exemple, cette plaquette 7 possède un rebord périphérique 7a qui s'emboîte dans la cartouche et repose sur un épaulement intérieur de celle-ci. La plaquette 7 peut être collée dans cette position.

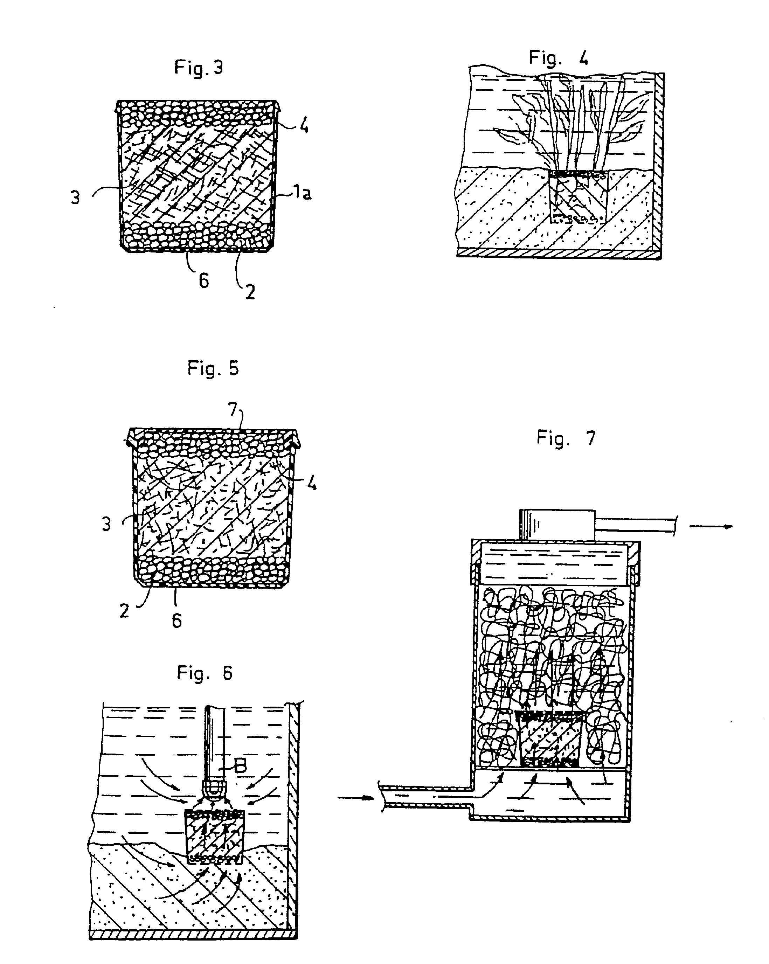

La cartouche conforme à l'invention peut être utilisée à l'intérieur d'un aquarium comme l'illustrent les figures 3 et 4, en vue d'effectuer des plantations dans celle-ci. Dans ce cas, on utilise une cartouche sans plaquette supérieure : le couvercle 5 de la cartouche est retiré et la pellicule 8 est décollée sous le fond 1b. La cartouche se présente alors comme le montre la figure 3 avec une face ouverte supérieure et un fond autorisant le passage de l'eau.

Elle est immergée dans l'aquarium et enfouie dans le sable comme le représente la figure 4. La cartouche possède alors une fonction de régénération d'eau, tout en permettant de procéder à des plantations directement dans celle-ci.

La cartouche conforme à l'invention peut également être utilisée avec la seule fonction de régénération d'eau. On se sert alors d'une cartouche dotée d'une plaquette 7 percée : le couvercle 5 est retiré et la pellicule 8 est décollée sous le fond 1b. La cartouche se présente alors comme le montre la figure 5.

Elle peut être posée par son fond sur le sable de l'aquarium de façon à présenter une position stable telle que représentée à la figure 6, à proximité d'un buse d'aspiration B. La cartouche est ainsi soumise à une circulation intérieure d'eau et assure une régénération biologique de celle-ci par transformation des nitrites en nitrates. Au bout d'un mois environ, on peut constater une meilleure croissance des plantes, une vigueur accrue des animaux et une disparition des algues.

Il est à noter que ces effets se poursuivent pendant plusieurs mois avec une efficacité constante (entre 6 et 9 mois) ; au terme de ce délai, la cartouche épuisée doit être retirée car il semble que des phénomènes inverses se produisent alors (transformation des nitrates en nitrites) avec des effets défavorables.

Il faut également souligner les effets favorables suivants pendant la période d'efficacité : réduction des excréments de poissons stagnant sur le fond de l'aquarium, meilleure accoutumance des poissons nouvellement introduits dans l'aquarium.

Par ailleurs, la cartouche conforme à l'invention peut également être utilisée dans un filtre externe d'aquarium comme l'illustre la figure 7. Dans ce cas, la cartouche telle que présentée à la figure 5 est disposée dans le filtre de façon que son axe se trouve dans la direction de circulation du flux d'eau en vue d'être traversée par une partie de celui-ci.

**Revendications**

1. Procédé de régénération d'une eau d'aquarium, caractérisé en ce qu'il consiste à disposer, à un emplacement où existe une circulation d'eau, un volume d'amendement organique naturel, fabriqué par le procédé qui consiste essentiellement à :

(a) recueillir des fumiers d'animaux, tels que fumiers d'ovins, de bovins ou de chevaux,

(b) recueillir des déchets végétaux, tels que rafles de maïs, déchets végétaux d'ensilage, émondes de haies ou branchages,

(c) broyer lesdits déchets végétaux,

(d) mélanger les fumiers d'animaux et le broyat de déchets végétaux,

(e) humidifier le mélange ou les composants avant mélange,

(f) confectionner au moyen dudit mélange humidifié des andains situés les uns a proximité des autres sur une aire de compostage,

(g) ventiler chaque andain par aspiration intermittente d'air à travers chacun d'eux,

(h) contrôler la température au coeur des andains et récupérer le compost en fin de fermentation lorsque la température décroît au-dessous d'un seuil prédéterminé,

(i) recycler le compost ainsi récupéré en le mélangeant et en confectionnant de nouveaux andains sur une aire de maturation,

(j) ventiler ces nouveaux andains par soufflage en vue d'assurer une fermentation complémentaire et un premier séchage,

(k) soumettre ledit compost à un séchage complémentaire,

(l) et affiner ensuite ledit compost en le soumettant à un broyage final.

2. Procédé de régénération selon la revendication 1, caractérisé en ce que l'on dispose entre 0,2 g et 0,4 g d'amendement organique par litre d'eau contenue dans l'aquarium.

3. Procédé de régénération selon l'une des revendications 1 ou 2, consistant à utiliser, à l'intérieur d'un aquarium à fond de sable, un produit conditionné en cartouche (1) possédant deux faces opposées permettant le passage de l'eau, l'amendement organique (3) étant interposé entre deux couches perméables à l'eau (2, 4), disposées au niveau desdites faces en vue de la rétention dudit amendement, ladite cartouche étant immergée dans l'aquarium avec son fond bloqué dans le sable de l'aquarium.

4. Procédé selon l'une des revendications 1 ou 2, consistant à utiliser, à l'intérieur d'un filtre externe d'aquarium, un produit conditionné en cartouche (1) possédant deux faces opposées permettant le passage de l'eau, l'amendement organique (3) étant interposé entre deux couches perméables à l'eau (2, 4), disposées au niveau desdites faces en vue de la rétention dudit amendement, ladite cartouche étant insérée dans le filtre externe de façon à ce qu'elle soit traversée par le flux d'eau.

5. Produit de régénération biologique d'un milieu aquatique, notamment eau d'aquarium, caractérisé en ce qu'il comprend, conditionné en cartouche (1) possédant deux faces opposées permettant le passage de l'eau, un amendement organique (3) naturel, fabriqué par le procédé défini à la revendication 1.

6. Produit de régénération selon la revendication 5, dans lequel l'amendement est interposé entre deux couches perméables à l'eau (2, 4), disposées au niveau des faces de la cartouche en vue de sa rétention.

7. Produit de régénération selon l'une des revendication 5 ou 6, dans lequel la cartouche de conditionnement (1) possède, d'une part, un fond (1b) percé d'une pluralité de lumières de passage d'eau (6) obturées par une pellicule autocollante à détacher (8), d'autre part, une face opposée ouverte munie d'un couvercle (5) clipsé sur le pourtour de la cartouche.

8. Produit de régénération selon la revendication 7, caractérisé en ce que la face ouverte de la cartouche de conditionnement est munie d'une plaquette (7) percée d'une pluralité de lumières de passage d'eau (9), située au-dessous du couvercle (5).

9. Produit de régénération selon l'une des revendications 5, 6, 7 ou 8, dans lequel chaque couche (2, 4) de rétention de l'amendement organique est constituée par de petits graviers.

10. Produit selon la revendication 9, conditionné en dose pour la régénération d'un volume de 50 litres d'eau, caractérisé en ce que la cartouche (1) contient entre 10 et 20 g d'amendement organique (3) et, de part et d'autre, deux couches (2, 4) de graviers de granulométrie moyenne de l'ordre de 3 à 4 mm, les lumières de passage d'eau du fond (1b), et le cas échéant de la plaquette (7) ayant des diamètres inférieurs à 2,5 mm et étant prévues en nombre approprié pour former une section totale de passage d'eau comprise entre 0,5 et 1,5 cm².

## Patentansprüche

1. Verfahren für die Regeneration eines Aquariumwassers, dadurch gekennzeichnet, daß es darin besteht, in einem Bereich, in dem Wasserumlauf stattfindet, eine Menge natürlichen organischen Verbesserungsmittels vorzusehen, wobei dieses nach dem Verfahren gefertigt wird, das im wesentlichen die folgenden Stufen umfaßt:

(a) Erfassen tierischen Düngers wie des Düngers von Schafen, Rindern oder Ziegen,

(b) Erfassen von planzlichen Abfällen wie Maiskolben, bei der Gärfutterbereitung anfallenden pflanzlichen Abfällen, ausgeästetem Heckenmaterial oder Zweigen,

(c) Brechen der besagten pflanzlichen Abfälle,

(d) Mischen des tierischen Düngers mit dem Brechgut aus pflanzlichen Abfällen,

(e) Befeuchten des Gemisches oder der Bestandteile vor dem Mischen,

(f) Herstellen mittels des besagten befeuchteten Gemisches von nahe aneinander auf einer Kompostierfläche liegenden Schwaden,

(g) Lüften jeder Schwade durch intermittierendes Ansaugen von Luft durch jede der besagten Schwaden hindurch,

(h) Überwachen der Temperatur in Innern der Schwaden und Erfassen des Komposts nach Abschluß der Gärung, wenn die Temperatur unter eine festgesetzte Grenze absinkt,

(i) Aufarbeiten des auf diese Weise gewonnenen Komposts, indem man ihn mischt und daraus auf einer Ausreiffläche neue Schwaden macht,

(j) Lüften dieser neuen Schwaden durch Blasen, um komplementäre Gärung und anfängliches Trocknen zu gewährleisten,

(k) Unterziehen des besagten Komposts komplementärer Trocknung,

(l) und schließlich Veredelung des besagten Komposts, indem man ihn einer letzten Brechstufe unterzieht.

2. Regenerationsverfahren nach Anspruch 1, dadurch gekennzeichnet, daß man je Liter des in dem Aquarium enthaltenen Wassers zwischen 0,2 g und 0,4 g organisches Verbesserungsmittel vorsieht.

3. Regenerationsverfahren nach einem der Ansprüche 1 oder 2, darin bestehend, daß man im Inneren eines Aquariums mit Sandboden von einem Produkt Gebrauch macht, das in Kassette (1) konditioniert wurde, wobei die besagte Kassette zwei gegenüber befindliche Flächen aufweist, durch die das Wasser hindurchfließen kann, wobei sich das organische Verbesserungsmittel (3) zwischen zwei in Höhe der besagten Flächen vorgesehenen wasserdurchlässigen Schichten (2, 4) befindet, um das besagte Verbesserungsmittel einzubehalten, während die besagte Kassette mit in dem Aquariumsand blockiertem Boden in dem Aquarium untergetaucht wird.

4. Verfahren nach einem der Ansprüche 1 oder 2, darin bestehend, daß man in das Innere eines äußeren Aquariumfilters ein in Kassette (1) mit zwei den Wasserdurchlauf gestattenden gegenüberliegenden Flächen konditioniertes Produkt einführt, wobei sich das organische Verbesserungsmittel (3) zwischen zwei in Höhe der besagten Flächen vorgesehenen wasserdurchlässigen Schichten (2, 4) befindet, um das besagte Verbesserungsmittel einzubehalten, während die besagte Kassette in das Außenfilter eingesetzt wird, damit der Wasserfluß durch sie hindurchgeht.

5. Produkt für die biologische Regeneration eines aquatischen Mediums, insbesondere Aquariumwasser, dadurch gekennzeichnet, daß es, in Kassette (1) mit zwei den Wasserdurchlauf gestattenden gegenüberliegenden Flächen konditioniert, ein natürliches organisches Verbesserungsmittel (3) umfaßt, das nach dem in Anspruch 1 definierten Verfahren gefertigt wird.

6. Regenerationsprodukt nach Anspruch 5, bei dem sich das Verbesserungsmittel zwischen zwei wasserduchlässigen Schichten (2, 4) befindet, die zwecks dessen Einbehaltung in Höhe der Kassettenflächen angeordnet sind.

7. Regenerationsprodukt nach einem der Ansprüche 5 oder 6, bei dem die Konditionierkassette (1) einerseits einen Boden (1b) aufweist, durch den eine Vielzahl von durch einen entfernbaren selbsthaftenden Film (8) verschlossenen Wasserdurchlauföffnungen (6) hindurchführt, während andererseits eine gegenüberliegenden offene Fläche mit einem Deckel (5) versehen ist, der an dem Umfang der Kassette festgeklemmt ist.

8. Regenerationsprodukt nach Anspruch 7, dadurch gekennzeichnet, daß die offene Fläche der Konditionierkassette mit einer Platte (7) versehen ist, durch die eine Vielzahl von Wasserdurchlauföffnungen (9) hindurchführt, wobei sich die besagte Platte unterhalb des Deckels (5) befindet.

9. Regenerationsprodukt nach einem der Ansprüche 5, 6, 7 oder 8, bei dem jede Schicht (2, 4) zur Einbehaltung des organischen Verbesserungsmittels aus kleinem Kies besteht.

10. Produkt nach Anspruch 9, in Dosenform für die Regeneration einer Menge von 50 Liter Wasser konditioniert und dadurch gekennzeichnet, daß die Kassette (1) zwischen 10 und 20 g organisches Verbesserungsmittel (3) enthält und zu beiden Seiten zwei Schichten (2, 4) von Kies mit einer mittleren Korngröße im Bereiche von 3 bis 4 mm vorgesehen sind, wobei die Wasserdurchlauföffnungen im Boden (1b) und gegebenenfalls in der Platte (7) Durchmesser von weniger als 2,5 mm aufweisen und in solcher Anzahl vorhanden sind, daß sie eine Gesamtquerschnittsfläche für den Durchlauf des Wassers zwischen 0,5 und 1,5 cm² ergeben.

## Claims

1. Process for regeneration of aquarium water, characterised in that it consists in placing, at a site where there is water circulation, a quantity of natural organic improver produced by the process which consists essentially in

(a) gathering the dung of animals such as sheep, cattle or goat dung,

(b) gathering vegetable waste such as corn cobs, vegetable waste from silage making, hedge cuttings or branches,

(c) crushing said vegetable waste,

(d) mixing the animal dung with the crushed product of vegetable waste,

(e) moistening the mixture or the ingredients prior to mixture,

(f) making, with the aid of said moistened mixture, windrows located next to one another on a composting area,

(g) ventilating each windrow by intermittent aspiration of air through each of them,

(h) verifying the temperature at the core of the windrows and recovering the compost at the end of fermentation, once the temperature drops below a predetermined threshold,

(i) recycling the compost thus recovered while mixing it and making new windrows on a maturing area,

(j) ventilating these new windrows by blowing in order to ensure complementary fermentation and initial drying,

(k) subjecting said compost to complementary drying,

(l) and then refining said compost by subjecting it to final crushing.

2. Process for regeneration according to claim 1, characterised in that one applies between 0.2 g and 0.4 g organic improver per litre of water contained in the aquarium.

3. Process for regeneration according to one of claims 1 or 2, which consists in making use, within an aquarium containing a bottom layer of sand, of a product conditioned in cartridge (1), which has two opposite faces enabling the passage of water, whereby the organic improver (3) is interposed between two water-permeable layers (2, 4) located at the level of said faces with a view to retaining said improver, said cartridge being immersed in the aquarium with its base blocked by the sand in the aquarium.

4. Process according to one of claim 1 or 2, which consists in making use, inside an external filter of the aquarium, of a product conditioned in cartridge (1), this cartridge having two opposite faces enabling the passage of water, whereby the organic improver (3) is interposed between two water-permeable layers (2, 4) provided at the level of said faces with a view to retaining said improver, said cartridge being inserted in the external filter so that the flow of water passes through it.

5. Product for the biological regeneration of an aquatic medium, in particular aquarium water, characterised in that it comprises, conditioned in cartridge (1) which has two opposite faces enabling the passage of water, a natural organic improver (3) produced by the process defined in claim 1.

6. Product for regeneration according to claim 5, in which the improver is interposed between two water-permeable layers (2, 4), provided at the level of the cartridge faces with a view to retaining it.

7. Product for regeneration according to one of claims 5 or 6, in which conditioning cartridge (1) has, on the one hand, a base (1b) pierced by a plurality of openings for the passage of water (6), said openings being blocked by a removable self-adhesive film (8), and on the other hand an opposite open face provided with a lid (5) clipped to the periphery of the cartridge.

8. Product for regeneration according to claim 7, characterised in that the open face of the conditioning cartridge is provided with a plate (7) pierced by a plurality of openings for the passage of water (9), said plate being located below lid (5).

9. Product for regeneration according to one of claims 5, 6, 7 or 8, in which each layer (2, 4) for retaining the organic improver is constituted by small gravel.

10. Product according to claim 9, conditioned in a dose for regenerating a volume of 50 litres of water, characterised in that cartridge (1) contains between 10 and 20 g of organic improver (3) and, at either side, two layers (2, 4) of gravel with a mean grain size of the order of 3 to 4 mm, whereby the openings for passing water through the base (1b) and, if required, in plate (7) have diameters of less than 2.5 mm and are provided in a number appropriate to form a total section for the passage of water comprised between 0.5 and 1.5 sq.cm.

Fig. 1

Fig. 2

Fig. 3

Fig. 4

Fig. 5

Fig. 7

Fig. 6